# EUROPÄISCHE PATENTSCHRIFT

(11) **EP 0 424 759 B1**
(45) Veröffentlichungstag und Bekanntmachung des Hinweises auf die Patenterteilung: **05.01.1994**
(21) Anmeldenummer: 90119656.8
(22) Anmeldetag: 13.10.1990
(51) Int. Cl.: C09B 57/04

(54) **Verfahren zur Herstellung von Pigmenten auf Isoindolbasis**
Process for the manufacture of pigments on the basis of isoindole
Procédé de fabrication de pigments sur la base d'isoindole

(30) Priorität: 27.10.1989 DE 3935858
(43) Veröffentlichungstag der Anmeldung: 02.05.1991
(73) Patentinhaber: BAYER AG, 51368 Leverkusen (DE)
(72) Erfinder: Kaletta, Bernd, Dr., W-5090 Leverkusen 1 (DE); Rolf, Meinhard, Dr., W-5090 Leverkusen 1 (DE)

(56) Entgegenhaltungen:
- EP-A- 0 042 531
- DE-B- 1 012 406
- DE-B- 1 025 080
- DE-C- 879 102
- FR-A- 1 537 299
- FR-A- 2 107 064
- FR-A- 2 355 886

## Beschreibung

Die Erfindung betrifft ein neues Verfahren zur Herstellung von Pigmentfarbstoffen der Formel 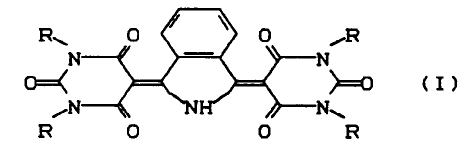
worin
R = Wasserstoff oder Substituent,
dadurch gekennzeichnet, daß man Phthalodinitril (II) in einem organischen Medium mit einem Alkohol (III) in Gegenwart einer Base, vorzugsweise bei Temperaturen von 0°C bis 100°C, umsetzt und anschließend, vorzugsweise ohne Zwischenisolierung, das Reaktionsprodukt in Gegenwart von Wasser mit Verbindungen der Formel 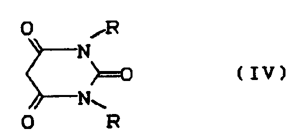
gegebenenfalls in Gegenwart von oberflächenaktiven Verbindungen im Molverhältnis 2:1, bezogen auf (II), umsetzt.

Bevorzugte Reste R sind unabhängig voneinander Wasserstoff, Alkyl, Cycloalkyl, Aryl oder Hetaryl.

Besonders bevorzugte Reste R sind Wasserstoff, C₁-C₆-Alkyl und gegebenenfalls substituiertes Phenyl.

Ganz besonders bevorzugt steht R für Wasserstoff, Methyl, Ethyl und Phenyl.

Die Umsetzung des Reaktionsprodukts aus (II) und (III) mit (IV) wird vorzugsweise bei Temperaturen zwischen 0°C und 150°C im Molverhältnis von 2:1 bis 6:1, bezogen auf (II), im pH-Bereich zwischen 1 und 6 durchgeführt.

Als Alkohole (III) kommen vorzugsweise C₁-C₆-Alkanole, C₂-C₆-Alkandiole und deren Mono-C₁-C₄-alkylether in Frage, beispielsweise Methanol, Ethanol, Propanol, i-Propanol, Butanol, i-Butanol, Glykole und Glykolderivate wie Ethylenglykol, Glykolmonomethylether, Glykolmonoethylether, Diethylenglykolmonomethyl- und -monoethylether.

Als organisches Medium für die Umsetzung von (II) mit (III) kommen bevorzugt mit Wasser mischbare organische Lösungsmittel wie cyclische oder offenkettige Ether, zum Beispiel Tetrahydrofuran, Dioxan, Ethylenglykoldimethylether, Ethylenglykoldiethylether, Oligo- und Polyglykole und deren Ether, und dipolar-aprotische Lösungsmittel wie Formamid, Dimethylformamid, Dimethylacetamid, N-Methylpyrrolidon und Dimethylsulfoxid sowie deren Mischungen, auch mit anderen Lösungsmitteln, in Frage.

Besonders bevorzugte organische Medien sind die Alkohole (III) selbst.

Als Basen kommen die Alkali- oder Erdalkalialkoholate der Alkohole (III) wie z.B. Natriummethylat, Natriumethylat oder auch Kalium-tert.-butylat, die Alkali- und Erdalkalihydroxide wie z.B. Natrium-, Kalium- oder Lithiumhydroxid sowie die Alkali- oder Erdalkalicarbonate wie z.B. Natriumcarbonat und Kaliumcarbonat in Frage.

Im einzelnen wird die Reaktion so durchgeführt, daß man die Komponenten des ersten Teilschritts in beliebiger Reihenfolge mischt, wobei es je nach den Umständen wie Art und Konzentration der eingesetzten Verbindungen angezeigt sein kann, die Reaktionswärme durch Kühlen abzuführen oder die Reaktion durch Erwärmen zu beschleunigen. Im allgemeinen wird man in einem Temperaturbereich arbeiten, in dem man übermäßiges Kühlen oder Erwärmen vermeidet. Ein derart günstiger Temperaturbereich liegt z.B. zwischen 0°C und ca. 100°C, jedoch kann die Reaktion auch bei tieferen oder höheren Temperaturen durchgeführt werden.

Die zugesetzte Base dient als Katalysator und muß daher nicht im stöchiometrischen Verhältnis eingesetzt werden. Bei zu geringen Basenmengen läuft die Reaktion jedoch unwirtschaftlich langsam ab. Bevorzugt sind daher 0,1 bis 1 Mol Base, bezogen auf 1 Mol (II).

Nach erfolgter Umsetzung wird das Reaktionsprodukt in Gegenwart von Wasser und gegebenenfalls einer anionischen, kationischen oder neutralen oberflächenaktiven Verbindung mit den Barbitursäurederivaten der Formel (IV) im Molverhältnis von ca. 1:2 bis 1:6, bevorzugt im Molverhältnis von ca. 1:2 bis ca. 1:3, umgesetzt. Der pH-Wert bei dieser Umsetzung wird zwischen 1 und 6, bevorzugt zwischen 1 und 5, ganz besonders bevorzugt zwischen 1,5 und 3,5, gehalten. Dies kann entweder durch Zugabe von Säure während der Reaktion geschehen, oder die Säure kann vor der Reaktion mit dem Wasser gemischt werden.

Als Säuren kommen Mineralsäuren, aliphatische oder aromatische Carbonsäuren, aliphatische oder aromatische Sulfonsäuren und Gemische der genannten Säuren in Frage.

Bevorzugt sind aliphatische wasserlösliche Carbonsäuren wie Ameisensäure, Essigsäure oder Propionsäure.

Die Umsetzung wird bei Temperaturen zwischen 0°C und 150°C durchgeführt, bevorzugt zwischen 20°C und 130°C.

Der Pigmentfarbstoff laut Anspruch 1 ist beispielsweise aus der FR-A-2 355 886 bekannt. Er wird jedoch nach einem unterschiedlichen Verfahren hergestellt.

Nach dem erfindungsgemäßen Verfahren erhält man die Pigmentfarbstoffe der Formel (I) in guten Ausbeuten und Reinheiten. Die nach dem erfindungsgemäßen Verfahren erhaltenen Produkte weisen eine hohe Brillanz, gute Licht- und Wetterechtheiten auf, sie sind zudem sehr gut dispergierbar.

### Beispiel 1

12,8 g Phthalodinitril werden in 100 ml Methanol suspendiert. Man setzt 5 ml einer 30 %igen Natriummethylatlösung zu und rührt bei Raumtemperatur 2 Stunden bis zur vollständigen Umsetzung. Die entstehende Lösung wird innerhalb von 30 Min. bei Raumtemperatur zu einer Suspension von 32 g Barbitursäure, 250 ml Wasser und 22 ml Ameisensäure gegeben. Es wird 1 Stunde bei Raumtemperatur nachgerührt, anschließend wird 3 Stunden am Rückfluß erhitzt. Das Produkt wird heiß abgesaugt und mit heißem Wasser neutral-gewaschen. Es werden 28,3 Teile Gelbpigment erhalten.

### Beispiel 2

Man verfährt nach Beispiel 1, verwendet jedoch anstelle der Natriummethylatlösung 1,2 g pulverisiertes Natriumhydroxid. Ausbeute: 31,2 g Gelbpigment.

### Beispiel 3

Man verfährt nach Beispiel 1, verwendet jedoch anstelle der Natriummethylatlösung 0,9 g pulverisiertes Kaliumhydroxid. Ausbeute: 31,1 g Gelbpigment.

### Beispiel 4

Man verfährt nach Beispiel 1, verwendet jedoch anstelle der Natriummethylatlösung 4,1 g Kaliumcarbonat. Ausbeute: 32,0 g Gelbpigment.

### Beispiel 5

Man verfährt nach Beispiel 1, verwendet jedoch anstelle des Methanols 100 ml Ethylenglykol. Ausbeute: 33,9 g Gelbpigment.

### Beispiel 6

Man verfährt nach Beispiel 1, verwendet jedoch anstelle der Ameisensäure 20 ml Essigsäure. Ausbeute: 29,7 g Gelbpigment.

### Beispiel 7

Man verfährt nach Beispiel 1, verwendet jedoch anstelle der Barbitursäure 39 g N,N-Dimethylbarbitursäure. Ausbeute: 34,5 g Gelbpigment.

### Beispiel 8

12,8 g Phthalodinitril werden in 100 ml Methanol suspendiert. Man setzt 5 ml einer 30 %igen Natriummethylatlösung zu und rührt bei Raumtemperatur 3 Stunden bis zur vollständigen Umsetzung. Zu der entstehenden Lösung werden nacheinander 32 g Barbitursäure, 12 ml Essigsäure und 150 ml Wasser gegeben. Es wird 1 Stunde bei Raumtemperatur nachgerührt, anschließend wird 3 Stunden zum Rückfluß erhitzt.

Das Produkt wird heiß abgesaugt und mit heißem Wasser neutral-gewaschen. Es werden 31,2 g Gelbpigment erhalten.

## Patentansprüche

1. Verfahren zur Herstellung von Pigmentfarbstoffen der Formel 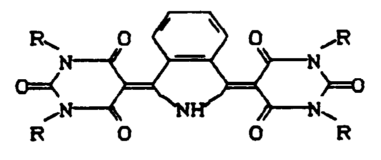 worin
R unabhängig voneinander = Wasserstoff oder Substituent,
dadurch gekennzeichnet, daß man Phthalodinitril (II) in einem organischen Medium mit einem Alkohol (III) In Gegenwart einer Base umsetzt und anschließend vorzugsweise ohne Zwischenisolierung, das Reaktionsprodukt in Gegenwart von Wasser mit Verbindungen der Formel 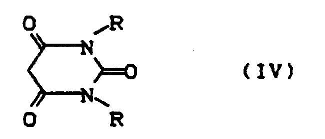 im Molverhältnis 2:1, bezogen auf (II), gegebenenfalls in Gegenwart von oberflächenaktiven Verbindungen, im pH-Bereich von 1 bis 6, vorzugsweise 1,5 bis 3,5, umsetzt.

2. Verfahren gemäß Anspruch 1, dadurch gekennzeichnet, daß man mit Verbindungen der Formel (IV) mit R = Wasserstoff, C₁-C₆-Alkyl oder Phenyl umsetzt.

3. Verfahren gemäß Anspruch 1, dadurch gekennzeichnet, daß man als Base ein Alkalialkoholat oder ein Alkalihydroxid einsetzt.

4. Verfahren gemäß Anspruch 1, dadurch gekennzeichnet, daß man mit 0,1 bis 1 Mol Base, bezogen auf (II), arbeitet.

5. Verfahren gemäß Anspruch 1, dadurch gekennzeichnet, daß man die Umsetzung von (II) mit (III) bei Temperaturen zwischen 10 und 100°C durchführt.

6. Verfahren gemäß Anspruch 1, dadurch gekennzeichnet, daß man die Umsetzung des Reaktionsproduktes aus (II) und (III) mit (IV) bei Temperaturen zwischen 20 und 130°C durchführt.

## Claims

1. Process for the preparation of pigments of the formula 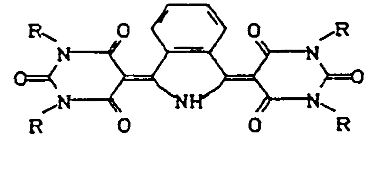 in which
each R, independently of one another, is hydrogen or a substituent,
characterized in that phthalodinitrile (II) is reacted in an organic medium with an alcohol (III) in the presence of a base and the reaction product is then reacted, preferably without isolating it, in the presence of water with compounds of the formula 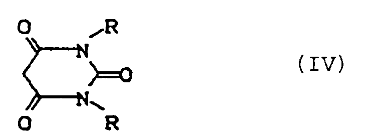 in a molar ratio of 2:1, relative to (II), if appropriate in the presence of surface-active compounds, in the pH range from 1 to 6, preferably 1.5 to 3.5.

2. Process according to Claim 1, characterized in that the reaction is carried out by means of compounds of the formula (IV) where R is hydrogen, C₁-C₆-alkyl or phenyl.

3. Process according to Claim 1, characterized in that an alkali metal alcoholate or an alkali metal hydroxide is used as the base.

4. Process according to Claim 1, characterized in that 0.1 to 1 mole of base, relative to (II), is used.

5. Process according to Claim 1, characterized in that the reaction of (II) with (III) is carried out at temperatures between 10 and 100°C.

6. Process according to Claim 1, characterized in that the reaction of the reaction product from (II) and (III) with (IV) is carried out at temperatures between 20 and 130°C.

## Revendications

1. Procédé de production de colorants pigmentaires de formule 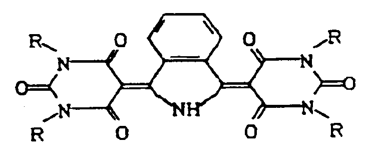 dans laquelle
les R représentent indépendamment les uns des autres l'hydrogène ou un substituant,
caractérisé en ce qu'on fait réagir du phtalodinitrile (II) en milieu organique avec un alcool (III) en présence d'une base, puis on fait réagir, de préférence sans isolement intermédiaire, le produit de réaction en présence d'eau avec des composés de formule 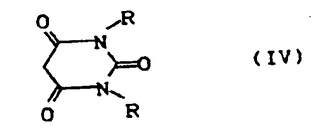 dans un rapport molaire de 2:1, relativement à (II), le cas échéant en présence de composés tensio-actifs, dans une plage de pH de 1 à 6, de préférence de 1,5 à 3,5.

2. Procédé suivant la revendication 1, caractérisé en ce qu'on fait réagir des composés de formule (IV) dans laquelle R représente l'hydrogène, un groupe alkyle en C₁ à C₆ ou un groupe phényle.

3. Procédé suivant la revendication 1, caractérisé en ce qu'on utilise comme base un alcoolate alcalin ou un hydroxyde alcalin.

4. Procédé suivant la revendication 1, caractérisé en ce qu'on opère avec 0,1 à 1 mole de base, par rapport à (II).

5. Procédé suivant la revendication 1, caractérisé en ce qu'on conduit la réaction de (II) avec (III) à des températures comprises entre 10 et 100°C.

6. Procédé suivant la revendication 1, caractérisé en ce qu'on conduit la réaction du produit réactionnel de (II) et (III) avec (IV) à des températures comprises entre 20 et 130°C.
